# EUROPÄISCHE PATENTSCHRIFT

(11) **EP 2 715 183 B1**
(45) Veröffentlichungstag und Bekanntmachung des Hinweises auf die Patenterteilung: **21.03.2018**
(21) Anmeldenummer: 11729550.1
(22) Anmeldetag: 03.06.2011
(51) Int. Cl.: F16F 1/36, C08L 53/02

(54) **VORRICHTUNG ZUR DÄMPFUNG VON STÖSSEN**
DEVICE FOR THE DAMPING OF IMPACTS
DISPOSITIF D'AMORTISSEMENT DE COUPS

(43) Veröffentlichungstag der Anmeldung: 09.04.2014
(73) Patentinhaber: Felix, Florian, 82467 Garmisch-Partenkirchen (DE)
(72) Erfinder: Felix, Florian, 82467 Garmisch-Partenkirchen (DE)
(74) Vertreter: Best, Michael
(86) Internationale Anmeldenummer: PCT/EP2011/002731
(87) Internationale Veröffentlichungsnummer: WO 2012/163376

(56) Entgegenhaltungen:
- JP-A- 2000 314 447
- JP-A- 2005 076 396
- JP-A- 2005 179 612
- JP-A- 2007 262 705
- JP-A- 2009 264 483
- JP-A- 2010 253 751
- JP-A- 2011 038 069
- JP-A- 2011 046 937

## Beschreibung

Die vorliegende Erfindung betrifft eine Vorrichtung zur Minderung der Wirkung von Stößen und Schwingungen, insbesondere von Vibrationen, insbesondere zu deren Dämpfung sowie deren Verwendung.

Um die Wirkung mechanischer Bewegungen wie Stöße oder Schwingungen zu vermindern, insbesondere zu dämpfen, sind dämpfende Materialien oder Dämpfungskörper aus dämpfenden Materialien im Stand der Technik bekannt. Die auftretende Minderung der Wirkung mechanischer Bewegungen beruht bei konventionellen Dämpfungsmaterialien im wesentlichen auf zwei Wirkprinzipien. So führen elastische Rückstellkräfte bei der Verformung elastischer Materialien zu einer der einwirkenden Bewegungskräfte entgegenwirkenden Kraft und somit zur Verminderung von Schwingungen, insbesondere zur Schwingungsdämpfung. Zweitens führt die Dissipation zur irreversiblen Umwandlung der Bewegungsenergie oder kinetischen Energie in Wärmeenergie. Durch die Dissipation wird somit die Bewegungsenergie der mechanischen Bewegung verringert oder absorbiert, und somit die Bewegung gedämpft. Insbesondere die Kraftbelastung bei einem Stoß wird somit in dem Dämpfungskörper herabgesetzt. Um nach der Einwirkung der mechanischen Belastung das dämpfende Material oder den Dämpfungskörper wieder in seine ursprüngliche Gestalt zu bringen, müssen bei plastischen Materialien entsprechende Vorkehrungen, wie Ummantelung mit elastischen Materialien, getroffen werden, die das dämpfende Material in die Ausgangsform zurückbringen. Alternativ können dämpfende Materialien eingesetzt werden, die zugleich elastisch sind, und eine rückstellende Kraft gegen ihre Deformation zur Herstellung der ursprünglichen Form selbst erzeugen.

Der Einsatz von viskoelastischen Materialien, wie verschiedenen Polyurethanschäumen, zur Schwingungsabsorption, jedoch auch zur Stoßabsorption ist im Stand der Technik bekannt. Als Viskoelastizität wird in diesem Zusammenhang eine zeit-, temperatur- und frequenzabhängige Elastizität von Polymeren verstanden. Viskoelastische Materialien weisen sowohl ein teilweise elastisches und als auch ein teilweise viskoses Verhalten auf. Bei viskoelastischen Polymeren beruht die Viskoelastizität insbesondere auf einer verzögerten Gleichgewichtseinstellung der Makromoleküle zueinander.

Je nach Zusammensetzung der bekannten Elastomere, wie z.B. Polyurethan, sind diese entweder für eine Wirkungsverminderung von Schwingungen oder Stößen geeignet. Dabei führt eine Verbesserung der Wirkungsverminderung von Schwingungen, beispielsweise einer Schwingungsdämpfung zu einer Abschwächung der Wirkungsverminderung von Stößen, beispielsweise einer Stoßdämpfung und umgekehrt. Eine Verbesserung einer Eigenschaft führt hierbei zur Abschwächung der anderen Eigenschaft.

Diese Korrelation liegt bei konventionellen Elastomeren im Zusammenhang von Elastizität und plastischer Verformung begründet.
Viele Elastomere weisen ein hohes Rückstellvermögen auf und sind daher zur Verminderung von Schwingungen, beispielsweise durch Schwingungsdämpfung geeignet. Das Rückstellvermögen beschreibt die Elastizität des Materials nach Krafteinwirkung, und wird nach DIN 53512 durch Bestimmung der Rückprallhöhe eines Hammers, der auf eine Probe des Materials fällt, bestimmt. Hohes Rückstellvermögen (Rückprallelastizität) entspricht hierbei niedriger plastischer Verformung. Niedrige plastische Verformung bedeutet aber niedrige Dissipation der Stoßenergie, und somit eine schwächere Wirkungsverminderung von Stößen, insbesondere eine schwächere Stoßdämpfung.

Als Elastomere mit hohem Rückstellvermögen sind beispielsweise Butadienelastomere, Styrolbutadienelastomere, Acrylnitrilbutadienelastomere, Isoprenelastomere, Vinylelastomere, wie EVA oder EVAC, Ethylenpropylencopolymer, wie EPDM, EPM, Acrylkautschuke, Polyisobutylene und Urethankautschuke bekannt. Ebenfalls zu nennen sind Siloxanelastomere aus vernetzten Polysiloxanen, wie Siloxankautschuke. Diese Elastomere mit gutem Rückstellvermögen weisen jedoch nur eine geringe Stoßdämpfung auf.

Demgegenüber sind im Stand der Technik Materialien bekannt, die sich durch höhere Wirkungsverminderung von Stößen auszeichnen. Diese Stoffe, beispielsweise plastische Elastomere, weisen beispielsweise eine verbesserte Stoßdämpfung auf, welche durch eine plastische Deformation des Elastomers unter Krafteinwirkung verwirklicht wird. Diese Polymere relaxieren nur wenig nach Aufnahme der externen Kraft, und bauen die zugeführte Energie durch interne Fließvorgänge ab, wobei sie ihre äußere Form verändern. Sie erreichen ihre ursprüngliche Form erst nach relativ langer Relaxationsdauer im Vergleich zu Elastomeren, oder gar nicht mehr. Typische Materialien sind, im Gegensatz zu den vernetzten Elastomeren, nicht vernetzte Polymere in gelartiger Konsistenz, wie Silikongele, Polyurethangele oder nicht vernetzter Kautschuk. Letzterer ist typischerweise nicht thermisch vernetzt, weist jedoch wenig Brückenbindungen auf.

Die WO 2004/022999 beschreibt beispielsweise eine Kollagenzusammensetzung mit guten mechanischen Dämpfungseigenschaften zur Dämpfung mechanischer Bewegung, insbesondere eines Stoßes.

JP 2009-264483 A beschreibt eine Vorrichtung, die aus einem Vibrationsdämpfer, einem Stoßdämpfer und einem Speichermedium besteht. Der Vibrationsdämpfer setzt sich aus einem styrolhaltigen, thermoplastischen Elastomer zusammen, das nicht weniger als 10% Styrol-Isopren-Styrol-Copolymer und optional als weitere Komponente ein gesättigtes, styrolhaltiges, thermoplastisches Elastomer enthält.

Die im Stand der Technik bekannten plastischen Polymere haben jedoch den Nachteil, dass sie nicht formstabil sind. So müssen Gele typischerweise durch andere elastische Materialien, die das Gel beispielsweise in Form eines Kissens begrenzen, wieder in die Ausgangsform gebracht werden, um einen erneuten Stoß ausreichend und wirksam dämpfen zu können.

Es besteht somit ein Bedarf an verbesserten Vorrichtungen, welche sowohl eine Wirkungsverminderung von Stößen, insbesondere durch Stoßdämpfung als auch eine Wirkungsminderung von Schwingungen, insbesondere eine Dämpfung von Stößen und Vibrationen aufweisen. Überraschenderweise wurde gefunden, dass bestimmte Thermoplasten, und zwar solche auf Basis von Styrol-Isobutylen-Blockcopolymeren, die sich auf Grund der Vernetzung der Buten-Blocke durch ein elastisches Verhalten kombiniert mit einer besonders stark ausgeprägten Thixotropie auszeichnen.

Unter Thermoplasten auf Basis von Styrol-Isobutylen-Blockcopolymeren werden im Sinne der Erfindung Thermoplaste verstanden, die 70 bis 100 Gew.-%, bevorzugt 70 bis 95 Gew.-% und besonders bevorzugt 75 bis 90 Gew.-% an Styrol-Isobutylen-Blockcopolymeren enthalten.

Als Thixotropie wird eine Abhängigkeit der Viskosität von der Dauer und Höhe der anliegenden Scherkräfte verstanden. Typischerweise zeigen Materialien wie z.B. nasser Sand, Schlamm, Zahnpasta oder Hyaluronsäure ein thixotropes Verhalten. Diese Materialien weisen jedoch keine signifikante Formstabilität im Shore A Messbereich auf.

Mit dem erfindungsgemäß eingesetzten Material liegt dagegen ein thixotroper Thermoplast vor, der auf Grund seiner Polymerarchitektur in der Lage ist, die eingeleitete Stossenergie durch Umstrukturierung der intermolekularen Wechselwirkungen unter Formerhalt zu dissipieren. Die Vernetzung der elastomeren Abschnitte im Thermoplasten führt dabei gleichzeitig zu einer Rückstellkraft. Somit bleibt die bekannte, elastische Dämpfungseigenschaft erhalten, die gewährleistet, dass das Material nach Verformung wieder in seine Ausgangsform übergeht.

Das erfindungsgemäß eingesetzte thermoplastische Material vereint durch seine Thixotropie bei gleichzeitiger Elastizität in überraschender und höchst vorteilhafter Weise die rheologischen Eigenschaften eines Gels mit der Elastizität eines Schaums bzw. elastischen Gummis. Erfindungsgemäß benötigt das eingesetzte thermoplastische Material im Unterschied zu konventionellen Gelen keine elastische Außenhülle.

Erfindungsgemäß kann das thermoplastische Material somit ausgezeichnet in einer Vorrichtung zur Verminderung der Wirkung von Stößen und Schwingungen, insbesondere zur Dämpfung von Stößen und Schwingungen verwendet werden, da es überraschenderweise die positiven Eigenschaften von elastischen Materialien (Festigkeit, Bearbeitbarkeit und Rückstellvermögen) mit den positiven Eigenschaften von viskoelastischen und thixotropen Materialien vereint.

Die vorliegende Erfindung betrifft daher eine Vorrichtung zur Verminderung der Wirkung von Stößen und Schwingungen, insbesondere zum Dämpfen von Stößen und Schwingungen, die einen Grundkörper (1) aus einem erfindungsgemäßen Thermoplasten auf Basis von Styrol-Isobutylen-Blockcopolymeren umfaßt, wobei der Thermoplast 70-100 Gew.-% an Styrol-Isobutylen-Blockcopolymer umfasst und die Polystyrolblöcke in den Blockcopolymeren 5-50 Gew.-%, bezogen auf das Gesamtgewicht des Blockcopolymers, umfassen. Der Grundkörper (1) ist als Deckschicht zumindest teilweise formschlüssig auf einem Träger (2) oder Abschnitten des Trägers (2) oder als Zwischenschicht zumindest teilweise formschlüssig zwischen Abschnitten des ersten Trägers (2) und des zweiten Trägers (3) angeordnet.

Bei den erfindungsgemäß eingesetzten Thermoplasten handelt es sich um ein Polymer auf Basis von Styrol-Isobutylen-Blockcopolmyeren. Styrol-Buten-Blockcopolymere sind aus dem Stand der Technik bekannt und sind beispielsweise erhältlich nach dem in der US 4,946,899 beschriebenen Verfahren. Eine bevorzugte Ausführung der Erfindung sieht die Verwendung eines Thermoplasten auf der Basis von Styrol-Isobutylen-Diblockcopolymeren vor. In einer weiteren vorteilhaften Ausgestaltung werden Thermoplasten auf der Basis von Triblockcopolymeren wie Styrol-Isobutylen-Styrol-Triblockcopolymere verwendet.
In den Blockcopolymeren weist der Polyisobutylenblock, eine mittlere Molmasse von vorzugweise 10.000 bis 200.000 g/mol, insbesondere 40.000 bis 100.000 g/mol auf. Die Polystyrolblöcke in den Blockcopolymeren, insbesondere in dem Triblockcopolymer, umfassen 5 bis 50 Gew.-%, bezogen auf das Gesamtgewicht des Blockcopolymers. Die Blockcopolymere können linear sein, insbesondere lineare Diblock- bzw. Triblockcopolymere. Alternativ können ebenfalls sternförmige Blockcopolymere mit 3-6 Armen oder mehr, wie aus dem Stand der Technik bekannt, eingesetzt werden.

Der Thermoplast umfasst 70 bis 100 Gew.-%, vorzugsweise 70 bis 95 Gew.-%, insbesondere 75 bis 90 Gew.-% an Styrol-Isobutylen-Blockcopolymeres bzw. des Styrol-Isobutylen-Styrol-Triblockcopolymers, und vorzugsweise 0 bis 50 Gew.-%, insbesondere 5 bis 30 Gew.-%, besonders bevorzugst 10 bis 25 Gew.-% mindestens eines weiteren Hilfsstoffs und/oder Polymers, vorzugsweise Polymers.

In der Vorrichtung zur Verminderung der Wirkung von Stößen und Schwingungen, insbesondere zur Dämpfung von Stößen und Schwingungen, insbesondere von Vibrationen, gemäß der vorliegenden Erfindung ist der Grundkörper entweder als Deckschicht zumindest teilweise formschlüssig auf einem Träger oder Abschnitten eines Trägers beliebiger Form aufgebracht, und bietet somit eine dämpfende Oberfläche.

Somit kann ein Träger beliebiger Form durch Aufbringen der Deckschicht aus dem Thermoplasten gemäß der vorliegenden Erfindung von mechanischen Bewegungen, beispielsweise von Stößen und Schwingungen abgeschirmt werden, oder Stöße und Schwingungen, die auf den Träger ausgeübt werden, werden in ihrer Wirkung vermindert an die Oberflache weitergeben. Der Grundkörper wird im Sinne der Erfindung auch als dämpfendes Element bezeichnet. Alternativ kann der Grundkörper als Zwischenschicht zumindest teilweise formschlüssig zwischen Trägern oder deren Abschnitten vorgesehen sein, um Stöße und Schwingungen, die auf den einen Träger wirken, nur in geminderter Form, insbesondere gedämpft auf den anderen Träger zu übertragen. In dieser Ausführungsform wirkt der Grundkörper somit als dämpfendes Glied zwischen den Trägern. Die Verbindung zwischen Grundkörper und Trägern, sowohl als Deckschicht als auch als Zwischenschicht, ist zumindest teilweise formschlüssig, vorzugsweise haftungsbeständig, beispielsweise geklebt, ausgeführt.

In einer weiteren vorteilhaften Ausgestaltung der Erfindung wird das thermoplastische Material laminiert und beispielsweise in einen Verbundwerkstoff integriert.

Vorzugsweise hat der Grundkörper, sowohl als Deckschicht, als auch als Zwischenschicht, eine Härte zwischen 25 und 70, mehr bevorzugt zwischen 30 und 60, insbesondere zwischen 40 und 60 Shore Härte A (gemessen nach DIN 53505).

In einer bevorzugten Ausführungsform der Vorrichtung gemäß der vorliegenden Erfindung ist der Grundkörper einstückig.

In einer bevorzugten Ausführungsform umfasst der Thermoplast neben dem Styrol-Isobuten-Blockcopolymer bzw. dem Styrol-Isobutylen-Styrol-Triblockcopolymer ein weiteres Polymer. Das weitere Polymer ist vorzugsweise ein Harz zur Erhöhung der Adhäsions- und Kohäsisionskräfte im Thermoplasten, also ein Klebrigmacher-Harz, wie ein Klebrigmacher-Harz auf Basis eines aliphatischen Petroleumharzes, eines Terpen-basierenden Harzes, eines Kolophonium-basierten Harzes oder eines DCPD (Dicyclopentadienyl)-basierenden Harzes. Alternativ oder zusätzlich zum Klebrigmacher-Harz enthält der Thermoplast neben dem Styrol-Isobutylen-Blockcopolymer bzw. dem Styrol-Isobutylen-Styrol-Triblockcopolymer ein weiteres Polymer auf Basis eines aliphatischen Olefins, insbesondere ein Polyethylen, Polypropylen oder Polyoctan. Auch weitere übliche Zusatzstoffe oder Additive (z.B. Stabilisatoren etc.) können vorhanden sei.

Durch Einsatz des Klebrigmacher-Harzes, bzw. des weiteren Polymers auf Basis eines aliphatischen Olefins können die Dämpfungseigenschaften, insbesondere die Thixotropie des Thermoplasten nach Bedarf eingestellt werden. Somit ist es möglich, eine Vorrichtung zur Verminderung der Wirkung von Stößen und Schwingungen, insbesondere zur Dämpfung von Stößen und Schwingungen mit jeweils maßgeschneiderten Eigenschaften zu erhalten.

Die Zugabe eines Klebrigmacher-Harzes oder -Öles führt hierbei zu einer Verschiebung der Thixotropie und somit der maximalen Dämpfung hin zu tieferen oder höheren Temperaturen, je nach Eigenschaftsprofil des Harzes oder Öles. Die Zugabe eines Polymers auf Basis eines aliphatischen Olefins führt typischerweise zu einer Verschiebung der Thixotropie zu höheren Temperaturen, d.h. die maximale Dämpfung des Thermoplasten wird bei höheren Temperaturen erreicht.

Die sehr gute Verminderung der Wirkung von Stößen und Schwingungen, insbesondere der Stoß- und Vibrationsdämpfung der Vorrichtung über einen großen Temperaturbereich prädestiniert diese insbesondere zur Verwendung im Bereich der Sportgeräte, insbesondere auch im Wintersportbereich.

Bei den erfindungsgemäßen Vorrichtungen kann einerseits der Grundkörper als dämpfende Deckschicht eingesetzt werden, beispielsweise bei Racketsportgeräten als Griffteile oder Rahmenelementen zur Dämpfung der Stöße, die auf den Schlägergrundkörper wirken. Somit wird die Schwingungsübertragung über den Schläger auf die Hand des Spielers, was zu einer Verbesserung des Spielverhaltens des Schlägers führt. So sieht eine Ausführungsform die Verwendung der erfindungsgemäßen Vorrichtung im Haltegriff oder Rahmen eines Sportgerätes. Bei dem Haltegriff kann es sich dabei um den Haltegriff oder Rahmen eines Racketsportgerätes, insbesondere eines Tennis-, Badminton, Squash-, Racketball-, Petel-, oder Tischtennisschlägers oder auch Baseballschlägers handeln.

Weiterhin kann die erfindungsgemäße Vorrichtung auch im Fahrradsport, insbesondere im Fahrradrahmen und in Bestandteilen eines Fahrrads, insbesondere Lenker, Vorbau, Kurbel, Pedal, Griff, Gepäckträger, Sattel, Sattelstütze, Bremshebel, Sattelkomponenten, Sattelstangen, Sitzstangen, Gabeln, Gabelauflagen, fixierende Klemmen, Naben und eingesetzt werden. Hier kann die Vorrichtung sowohl als dämpfende Deckschicht, beispielsweise an den Lenkradgriffen, wie auch als Zwischenschicht, beispielsweise im Fahrradrahmen zur Dämpfung, eingesetzt werden. Eine bevorzugte Ausführung der erfindungsgemäßen Vorrichtung sieht eine Laminierung des Thermoplasten in ein Verbundmaterial, beispielsweise in den Fahrradrahmen vor.

Bei einer weiteren Ausführung gemäß der vorliegenden Erfindung handelt es sich vorzugsweise um ein Wintersportgerät, insbesondere Ski oder Snowboard oder Schlitten, bzw. Teile davon, wie Skibindungen und Skibindungsplatten. So kann die Vorrichtung in das Verbundmaterial des Skis integriert werden und über die Dämpfung das Laufverhalten günstig beeinflussen.

Die erfindungsgemäße Vorrichtung kann auch in Freizeitsportgeräten, wie Wanderstöcke, beispielsweise Trekking-, Hiking-, Nordic Walking-, Tour-, Skating- und Skistöcke eingesetzt werden. Eine weitere vorteilhafte Ausgestaltung der Erfindung sieht die Verwendung der Vorrichtung in Werkzeugen wie beispielsweise in Gartengeräten, Forstgeräten, Geräte für die Landschaftspflege sowie Geräte für Bautechnik, beispielsweise Schaufeln, Harken, Rechen, Sägen, Scheren, insbesondere Handschaufeln, Spaten, Gartenscheren, Handsägen sowie Motorsägen vor, wobei die Vorrichtung sowohl als dämpfende Deck- als auch Zwischenschicht verwendet werden kann.
Es ist ebenfalls vorteilhaft, die erfindungsgemäße Vorrichtung in Teilen von Kraftfahrzeugen, insbesondere Teilen der Karosserie; sowie Schuheinlagen, beispielsweise orthopädische Schuheinlagen sowie faserverstärkte Sohlen, beispielsweise von Laufschuhen, Rad-, und Wanderschuhen zu verwenden.

Bei den erfindungsgemäßen Vorrichtungen kann einerseits der Grundkörper als dämpfende Deckschicht eingesetzt werden, beispielsweise bei den Racketsportgeräten als Griffteile zur Dämpfung der Stöße, die auf den Schlägergrundkörper wirken, gegen die Übertragung auf die Hand. Alternativ, oder zusätzlich, kann der Grundkörper als Zwischenschicht eingesetzt werden, beispielsweise innerhalb des Griffs oder Griffstiels, um den Kraftfluß des Stoßes, der auf den Schlägerkopf wirkt, nur vermindert an den Schlägergriff zu übertragen. Entsprechend kann beispielsweise der Grundkörper in den Griff oder Stiel eines Handgerätes, wie einen Spaten, eine Schere oder eine Motorsäge integriert werden.

Die Erfindung betrifft desweiteren die Verwendung eines Thermoplasten wie oben beschrieben auf Basis eines Styrol-Isobuten-Blockcopolymeres bzw. eines Styrol-Isobutylen-Styrol-Triblockcopolymeres zur Verminderung der Wirkung von Stößen und Schwingungen, insbesondere zum Dämpfen von Stößen und Schwingungen in einer Vorrichtung wie oben beschrieben, insbesondere in Wintersportgeräten, Racketsportgeräten, Fahrrädern, oder Teilen davon, Freizeitsportgeräten, Gartengeräten, Teilen von Kraftfahrzeugen und Teilen von Schuhen, wie oben beschrieben.

### Kurzbeschreibung der Figuren

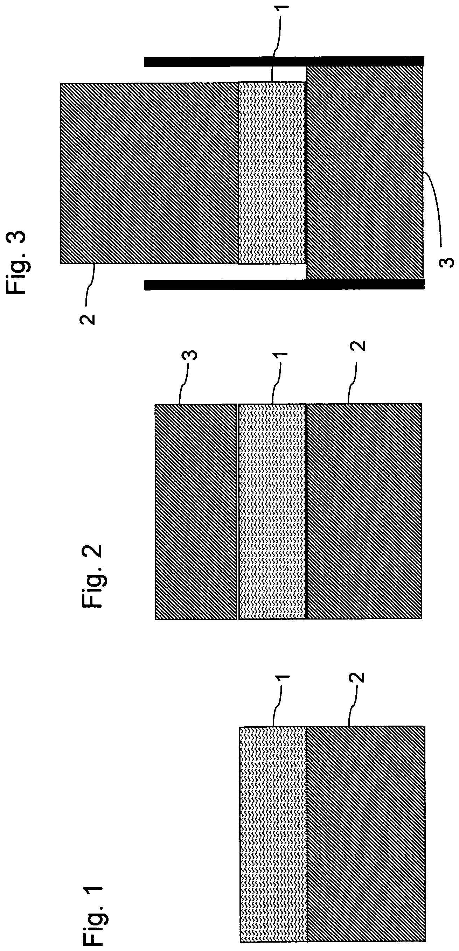

Figur 1 stellt schematisch den Grundkörper 1 als Deckschicht auf dem Träger 2 dar.
Figur 2 stellt schematisch den Grundkörper 1 als Zwischenschicht zwischen dem ersten Träger 2 und dem zweitem Träger 3 dar.
Figur 3 stellt schematisch den Grundkörper 1 als Zwischenschicht zwischen dem ersten Träger 2 und dem zweitem Träger 3 dar, der in der beispielhaften Ausführung als dämpfendes Glied, z.B. in einem Griff oder Stiel eines Gerätes fungiert.
Figur 4 stellt schematisch als ein Ausführungsbeispiel eine Schaufel dar, in deren Griffelement 42 der dämpfende Grundkörper 1 derart eingelassen ist, dass kein direkter Kontakt zwischen dem Griffelement 42 und dem Schaufelstiel 5 vorhanden ist.
Figur 5 zeigt den Grundkörper 1 in einem laminierten Verbundmaterial zur Verwendung in einem Ski 12. Das abgebildete Laminat umfasst in Schicht 11 den Belag und die Kante des Skis, zwei Schichten aus Kunstoff-Faser-Verbundmaterial wie beispielsweise Glasfaser-Kunststoff-Verbundmaterial (GFK) oder Carbonfaser-Kunststoff-Verbundmaterial (CFK) 9, zwischen denen sich der Grundkörper 1 und der Skiern 10 befinden sowie die darüber liegende Deckschicht 8.
Figur 6 zeigt die Verwendung der Erfindung als eine externe Dämpfungsplatte, beispielsweise zur Fixierung auf einem Ski 12, bei der der Grundkörper 1 durch klebstoffhaltige Schichten 14 auf einer Rahmenplatte 15 fixiert wird.

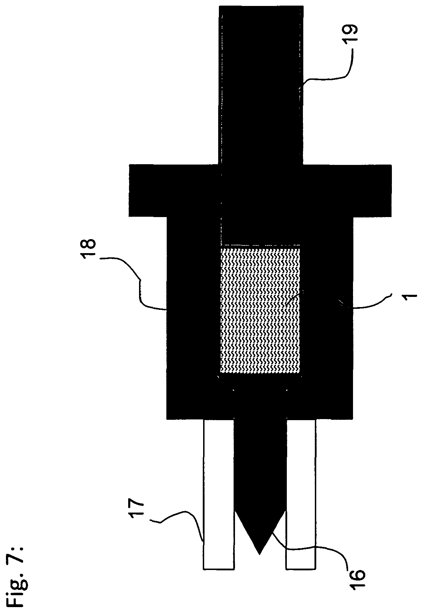

Figur 7 stellt den schematischen Aufbau eines Trekkingstocks mit stoßabsorbierender Spitze dar. Die Spitze 16 gleitet lose in der Spitzenhülse 18 und den Führungen 17. Spitze 16 und Stock 19 werden dabei durch den erfindungsgemäßen Grundkörper 1 verbunden.
Figur 8 zeigt schematisch ein Laminat 21 in Sandwichbauweise, bei dem der Grundkörper 1 von zwei Schichten eines CFK-Verbundmaterials 9 eingeschlossen, und welches in einem Fahrradrahmen 20 integriert wird.
Figur 9 zeigt die Verwendung des bereits in Figur 8 beschriebenen Laminats 21 in Rahmen 22 eines Racketsportgerätes.
Figur 10 stellt schematisch den Querschnitt des Aufbaus eines gedämpften Racketsportschlägers dar, bei dem der erfindungsgemäße Grundkörper 1 zwischen Schlägergriff 23 und Griffband 24 mit eingewickelt wurde.
Figur 11 zeigt schematisch als ein weiteres Ausführungsbeispiel ein Gewehr, an dessen Körperkontaktpunkte, insbesondere an Griff 26 und Kolben 25, der Grundkörper 1 in Form einer Folie appliziert wurde.

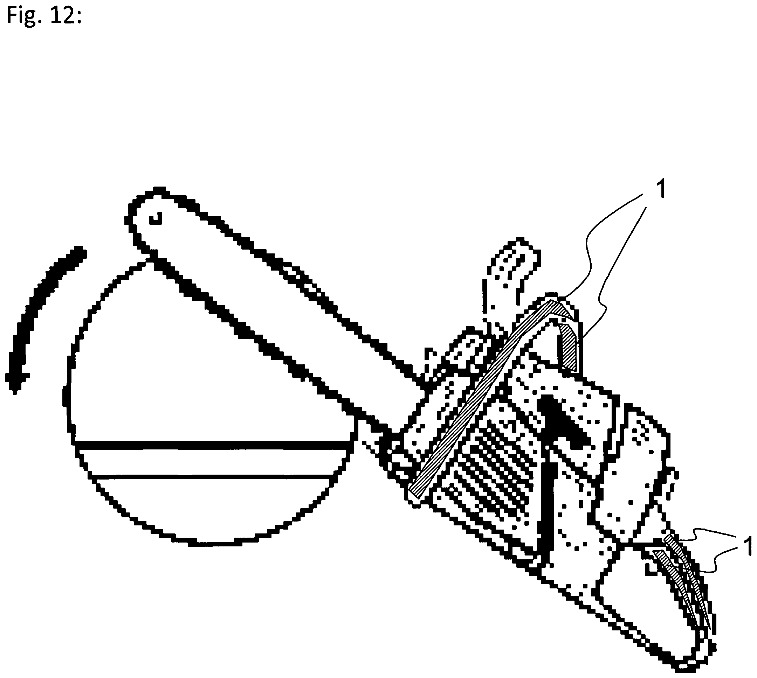

Figur 12 zeigt schematisch eine Motorsäge, auf deren Haltepunkte der Grundkörper 1 in Form einer dünnen Folie appliziert wurde.

### Detaillierte Beschreibung der Erfindung

Die Erfindung wird durch die vorliegenden Ausführungsbeispiele näher erläutert.

### Ausführungsbeispiel 1: Schaufel

Bei konventionellen Gartengeräten wie beispielsweise Schaufeln übertragen sich beim Graben oder Auflockern die Vibrationen und Stöße vom Schaufelblatt 6 über den Schaufelstiel 5 auf das Griffelement 42. Der Benutzer muss diese Stöße und Vibrationen ausgleichen, was zu einem zusätzlichen Kraftaufwand führt.

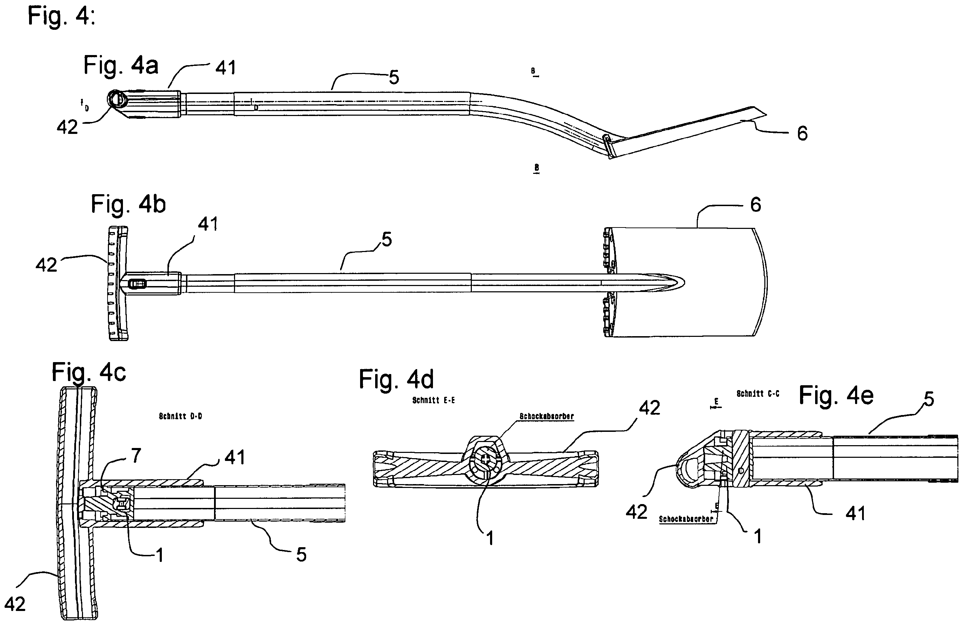

Im Ausführungsbeispiel 1 (Figur 4) sind Schaufelstiel 5 und Griffelement 42 nicht unmittelbar miteinander verbunden. Zwischen Griffelement 42 und Schaufelstiel ist eine Griffhülse 41 platziert. In der Griffhülse 41 trifft der Schaufelstiel 5 auf den erfindungsgemäßen Grundkörper 1, der somit vom Griffelement 42 und vom Schaufelstiel 5 begrenzt wird (Figur 4c). Erfindungsgemäß dämpft der Grundkörper die Stöße und Vibrationen, so dass diese nicht oder lediglich in abgeschwächter Form an das Griffelement 42 und damit auch den Benutzer weiter gegeben werden. Die maximale Dämpfung wird dabei durch die Arretierungen 7 begrenzt.

Die erfindungsgemäße Verwendung des Grundkörpers 1 im Ausführungsbeispiel führt zu einer höheren Kraftersparnis beim Arbeiten mit dem Gerät verglichen mit konventionellen Schaufeln.

### Ausführungsbeispiel 2: Ski mit interner Dämpfung

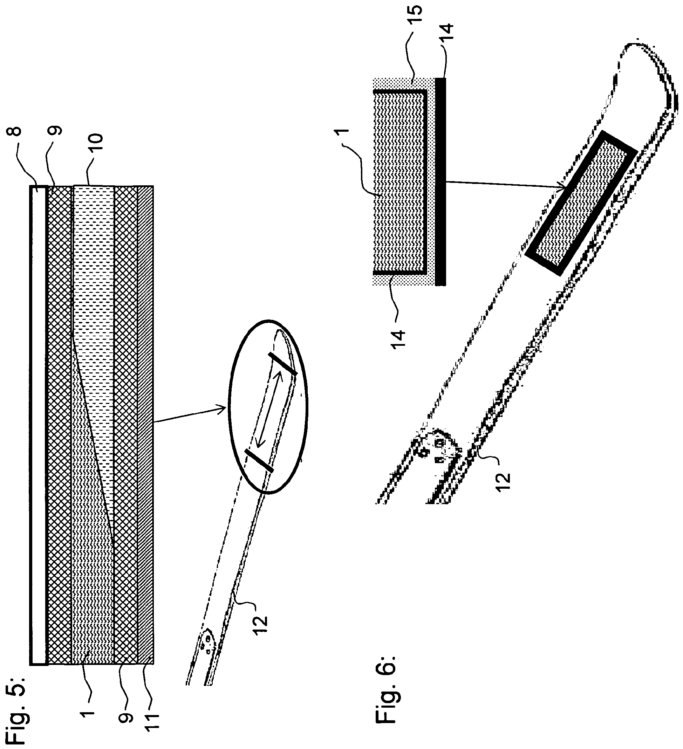

Im zweiten Ausführungsbeispiel, einem gedämpften Ski, wird der Grundkörper 1 gemäß Figur 5 bereichsweise in den Ski 12 einlaminiert. Das Laminat besteht an diesen Stellen des Skis 12 aus einer Schicht 11, die Belag und Kante des Skis bildet, und einer Schicht aus GFK und/oder CFK-Verbundmaterial 9. Darauf folgt der Grundkörper 1, der an der entsprechenden Stelle den Holz- bzw. Polyurethankern 10 ersetzt und/oder mit ihm überlappt. Die nachfolgende Schicht wird vom Verbundmaterial 9 gebildet, auf welche als oberste Schicht ein bedrucktes Topsheet folgt. Bevorzugt erfolgt der Einbau des erfindungsgemäßen Grundkörpers 1 überlappend zwischen Schaufel und Kernspitze des Skis 12. Es kann im direkten Vergleich mit einem konventionellen Ski gezeigt werden, dass die Einlaminierung des Grundkörpers 1 die beim Fahren auftretenden Vibrationen am Weiterlaufen zum Bindungsbereich hindert. Dazu führen Testfahrer jeweils mit einem Ski mit und ohne die erfindungsgemäße Konstruktion. Diese wirkt sich merklich positiv auf das Laufverhalten des Skis aus. So ist dieser laufruhiger und leichter zu kontrollieren, was zu einem deutlich komfortableren Fahrgefühl führt.

### Ausführungsbeispiel 3: Ski mit externer Dämpfung

Ein Grundkörper 1 wird gemäß Figur 6 mit klebstoffhaltigen Schichten 14 zunächst auf einer Rahmenplatte 15 fixiert. Die so präparierte Rahmenplatte 15 wird im vorderen Bereich des Skis 12, zwischen Schaufel und Kernspitze, auf den Ski 12 geklebt. Auch in diesem Ausführungsbeispiel kann, analog zum zweiten Ausführungsbeispiel, ein deutlich ruhigeres und leichter zu kontrollierendes Laufverhalten festgestellt werden.

### Ausführungsbeispiel 4: Trekkingstock

Bei Trekkingstöcken werden die Vibrationen und Stöße, die beim Aufsetzten des Stockes erzeugt werden, an den Läufer weiter gegeben, was zu einer vermehrten Kraftanstrengung führt und den Komfort mindert. Trekkingstöcke mit schockabsorbierender Spitze weisen meist eine Spitzenhülse 18 mit Führungen 17 auf, in denen die Spitze 16 lose gleitet. Zwischen Spitze 16 und dem Ende des Trekkingstocks 19 befindet sich ein Dämpfungsmaterial, im
Ausführungsbeispiel der Grundkörper 1. Mit der dargelegten Konstruktion wurden verschiedene Materialien wie Silikone, thermoplastische Elastomere sowie der erfindungsgemäße Thermoplast getestet. In Bezug auf die Vibrationsdämpfung ist die Konstruktion mit dem erfindungsgemäßen Thermoplasten den anderen getesteten Materialien klar überlegen.

### Ausführungsbeispiel 5: Fahrrad

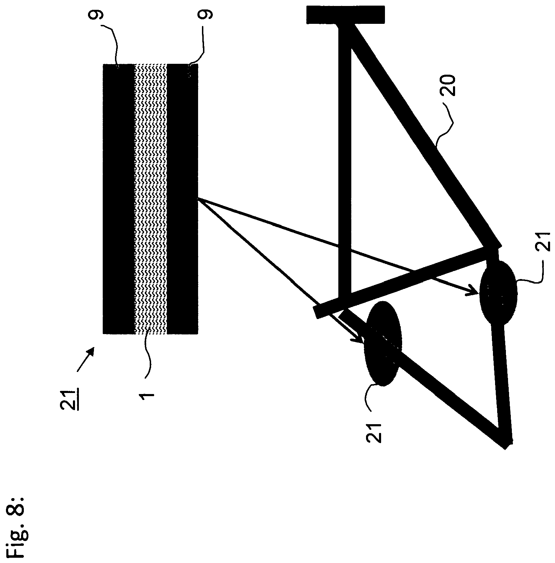

Der Grundkörper 1 wurde zwischen CFK-Schichten 9 einlaminiert. Das so gebildete Laminat 21 ist somit Bestandteil des Fahrradrahmens 20. Figur 8 zeigt die bevorzugten Einbaulagen, bei denen sich das Laminat 21 besonders vorteilhaft auf den Komfortgewinn auswirkt. Durch den partiellen Laminats 21 können sowohl die Vibrationen im Sattel wie auch im gesamten Rad deutlich vermindert werden.

### Ausführungsbeispiel 6: Tennisschläger

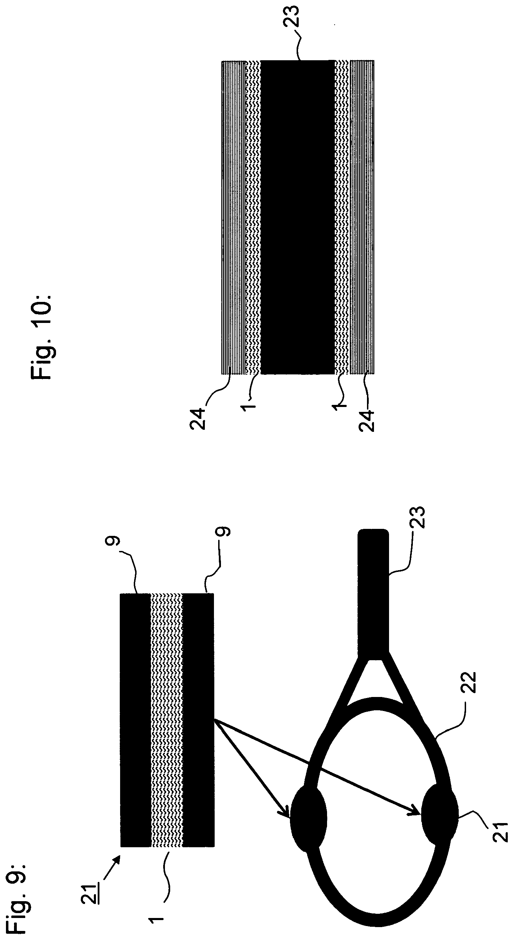

Gemäß des vorherigen Ausführungsbeispiels wurde der Grundkörper 1 zwischen die CFK-Schichten 9 des Rahmens 22 eines Tennisschlägers (Figur 9) einlaminiert. Dies führt zu einer erheblichen Reduktion der Vibrationen beim Aufprall des Balls und wirkt sich somit ganz entscheidend positiv auf das Spielverhalten.

### Ausführungsbeispiel 7: Schlägergriff

In einem weiteren Ausführungsbeispiel wurde der erfindungsgemäße Grundkörper 1 zwischen Schlägergriff 23 und Griffband 24 (Figur 10) mit eingewickelt. Wie in Ausführungsbeispiel 6 beschrieben, wurden auch hier die Vibrationen deutlich vermindert und der Komfort sowie das Spielverhalten verglichen mit einem konventionellen Schläger deutlich verbessert.

### Ausführungsbeispiel 8: Gewehr

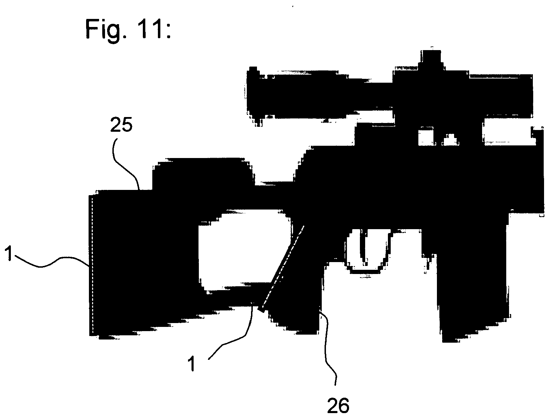

Gemäß Figur 11 wurde der Grundkörper 1 als dünne Folie auf die Körperkontaktpunkte, insbesondere an Griff 26 und Kolben 25, geklebt. Trotz der geringen Dicke der Folie von 1 mm konnte eine deutliche Reduktion des Rückstoss-Effektes auf den Körper beobachtet werden, was zu einem deutlich erhöhten Schusskomfort führt.

### Ausführungsbeispiel 9: Motorsäge

Analog zum Ausführungsbeispiel 8 wurde eine dünne Folie des Grundkörpers auf die Haltepunkte der Motorsäge geklebt. Auch hier konnte eine Kraftersparnis durch Reduktion von Vibrationen erreicht werden.

## Patentansprüche

1. Vorrichtung zur Minderung der Wirkung von Stößen und Schwingungen, insbesondere von Vibrationen, insbesondere zu deren Dämpfung **dadurch gekennzeichnet, dass** diese einen Grundkörper (1) aus einem Thermoplasten auf Basis eines Styrol-Isobutylen-Blockcopolymers umfasst, wobei der Grundkörper (1) als Deckschicht zumindest bereichsweise formschlüssig auf einem Abschnitt eines ersten Trägers (2) angeordnet ist, oder der Grundkörper (1) als Zwischenschicht zumindest bereichsweise formschlüssig zwischen Abschnitten eines ersten Trägers (2) und eines zweiten Trägers (3) angeordnet ist, und wobei der Thermoplast 70-100 Gew.-% an Styrol-Isobutylen-Blockcopolymer umfasst und die Polystyrolblöcke in dem Blockcopolymeren 5-50 Gew.-% bezogen auf das Gesamtgewicht des Blockcopolymers umfassen.

2. Vorrichtung gemäß Anspruch 1, wobei der Thermoplast eine Härte zwischen 25 und 70 Shore Härte A aufweist.

3. Vorrichtung gemäß einem der vorherigen Ansprüche, wobei der Grundkörper (1) einstückig ist.

4. Vorrichtung gemäß einem der vorherigen Ansprüche, wobei der Grundkörper (1) haftend mit einem ersten Träger (2) und/oder einem zweiten Träger (3) verbunden ist.

5. Vorrichtung gemäß einem der vorherigen Ansprüche, wobei der Grundkörper (1) mit einem ersten Träger (2) und einem zweiten Träger (3) ein Laminat bildet.

6. Vorrichtung gemäß einem der vorherigen Ansprüche, wobei der Thermoplast auf einem Styrol-Isobutylen-Styrol-Triblockcopolymeren basiert.

7. Vorrichtung gemäß einem der vorherigen Ansprüche, wobei der Thermoplast mindestens ein weiteres Polymer enthält.

8. Vorrichtung gemäß Anspruch 6, wobei das weitere Polymer ein Klebrigmacher-Harz oder Öl umfasst.

9. Vorrichtung gemäß Anspruch 7, wobei das Klebrigmacher-Harz ein aliphatisches Petroleum-Harz, ein Terpen-basiertes Harz, ein Kolophonium-basiertes Harz, oder ein DCPDbasiertes Harz, bzw. Mischungen davon ist.

10. Vorrichtung gemäß einem der vorherigen Ansprüche, wobei der Thermoplast mindestens ein weiteres Polymer auf Basis eines aliphatischen Olefins enthält, vorzugsweise Polyethylen oder Polypropylen.

11. Vorrichtung gemäß einem der vorherigen Ansprüche, wobei es sich um ein Wintersportgerät, insbesondere einen Ski, Snowboard, Schlitten, Bob oder Teile davon, ein Racketsportgerät, insbesondere einen Tennis-, Badminton-, Squash-, Racketball-, Petel-, Tischtennis- oder Baseballschläger, ein Fahrrad, oder Teile davon, ein Freizeitsportgerät, insbesondere ein Wanderstock oder Skistock, ein Gartengerät, insbesondere eine Schaufel, Schere, Säge, oder Motorsäge, oder Teile davon, Teile von Kraftfahrzeugen oder um eine Schuheinlage handelt.

12. Verwendung eines Thermoplasten auf Basis eines Styrol-Isobutylen-Blockcopolymers als Grundkörper (1) in einer Vorrichtung zum Dämpfen von Stößen und Schwingungen, insbesondere von Vibrationen, nach einem der vorstehenden Ansprüche, wobei der Thermoplast 70-100 Gew.-% an Styrol-Isobutylen-Blockcopolymer umfasst und die Polystyrolblöcke in dem Blockcopolymeren 5-50 Gew.-% bezogen auf das Gesamtgewicht des Blockcopolymers umfassen.

13. Verwendung eines Thermoplasten gemäß Anspruch 12, im oder am Rahmen eines Fahrrads.

14. Verwendung eines Thermoplasten gemäß Anspruch 12 im oder am Zubehör- oder Bestandteil eines Fahrrads, insbesondere Lenker, Vorbau, Kurbel, Pedal, Griff, Gepäckträger, Sattel und/oder Sattelstütze.

## Claims

1. A device for reducing the effect of impacts and oscillations, in particular vibrations, in particular for the damping thereof, **characterized in that** it comprises a main body (1) of a thermoplastic on the basis of a styrene-isobutylene block-copolymer, wherein the main body (1) is arranged as a top layer at least partially positive on a section of a first carrier (2), or the main body (1) is arranged as an intermediate layer at least partially positive between sections of a first carrier (2) and a second carrier (3), and that the thermoplastic comprises 70-100 wt% of a styrene-isobutylene block-copolymer and the polystyrene blocks in the block-copolymers comprise 5-50 wt% based on the total weight of the block-copolymer.

2. The device according to claim 1, wherein the thermoplastic has a hardness between 25 and 70 Shore hardness A.

3. The device according to any one of the preceding claims, wherein the main body (1) is formed as one piece.

4. The device according to any one of the preceding claims, wherein the main body (1) is adhesively connected to a first carrier (2) and/or a second carrier (3).

5. The device according to any one of the preceding claims, wherein the main body (1) forms a laminate with a first carrier (2) and a second carrier (3).

6. The device according to any one of the preceding claims, wherein the thermoplastic is based on a styrene-isobutylene-styrene tri-block-copolymer.

7. The device according to any one of the preceding claims, wherein the thermoplastic contains at least one further polymer.

8. The device according to claim 6, wherein the further polymer comprises a tackifier resin or oil.

9. The device according to claim 7, wherein the tackifier resin is an aliphatic petroleum resin, a terpene-based resin, a rosin-based resin, or a DCPD-based resin and mixtures thereof, respectively.

10. The device according to any one of the preceding claims, wherein the thermoplastic contains at least one further polymer on the basis of an aliphatic olefin, preferably polyethylene or polypropylene.

11. The device according to any one of the preceding claims, with the device being a winter sports apparatus, in particular a ski, snowboard, slight, bob, or parts thereof, a racket sports apparatus, in particular a tennis, badminton, squash, racquetball, padel, table tennis, or baseball racket, a bicycle, or parts thereof, a leisure sports apparatus, in particular a walking stick or ski stick, a garden tool, in particular a shovel, scissors, saw, or power saw, or parts thereof, parts of motor vehicles, or a shoe cookie.

12. Use of a thermoplastic on the basis of a styrene-isobutylene block-copolymer as the main body (1) in a device for damping impacts and oscillations, in particular vibrations, according to any one of the preceding claims, wherein the thermoplastic comprises 70-100 wt% of styrene-isobutylene block-copolymers and the polystyrene blocks in the block-copolymers comprise 5-50 wt% based on the total weight of the block-copolymer.

13. The use of a thermoplastic according to claim 12 in or at the frame of a bicycle.

14. The use of a thermoplastic according to claim 12 in or at the accessory or component of a bicycle, in particular the handlebar, stem, crank, pedal, grip, carrier, seat, and/or seat post.

## Revendications

1. Dispositif servant à réduire l'effet de coups et d'oscillations, en particulier de vibrations, en particulier servant à leur amortissement, **caractérisé en ce qu'**il comprend un corps de base (1) composé d'une matière thermoplastique à base d'un copolymère séquencé de styrène-isobutylène, dans lequel le corps de base (1) est disposé en tant que couche de recouvrement au moins par endroits par complémentarité de forme sur une section d'un premier support (2), ou que le corps de base (1) est disposé en tant que couche intermédiaire au moins par endroits par complémentarité de forme entre des sections d'un premier support (2) et d'un deuxième support (3), et dans lequel la matière thermoplastique comprend 70 - 100 % en poids d'un copolymère séquencé de styrène-isobutylène et les séquences de polystyrène dans le copolymère séquencé comprennent 5 - 50 % en poids par rapport au poids total du copolymère séquencé.

2. Dispositif selon la revendication 1, dans lequel la matière thermoplastique présente une dureté comprise entre 25 et 70 Shore dureté A.

3. Dispositif selon l'une quelconque des revendications précédentes, dans lequel le corps de base (1) est d'un seul tenant.

4. Dispositif selon l'une quelconque des revendications précédentes, dans lequel le corps de base (1) est relié de manière adhésive au premier support (2) et/ou à un deuxième support (3).

5. Dispositif selon l'une quelconque des revendications précédentes, dans lequel le corps de base (1) forme avec un premier support (2) et un deuxième support (3) un stratifié.

6. Dispositif selon l'une quelconque des revendications précédentes, dans lequel la matière thermoplastique a pour base un copolymère triséquencé de styrène-isobutylène-styrène.

7. Dispositif selon l'une quelconque des revendications précédentes, dans lequel la matière thermoplastique contient au moins un autre polymère.

8. Dispositif selon la revendication 6, dans lequel l'autre polymère comprend une résine ou une huile d'adhésivité.

9. Dispositif selon la revendication 7, dans lequel la résine d'adhésivité est une résine de pétrole aliphatique, une résine à base de terpène, une résine à base de colophane ou une résine à base de DCPD ou des mélanges de ces dernières.

10. Dispositif selon l'une quelconque des revendications précédentes, dans lequel la matière thermoplastique contient au moins un autre polymère à base d'une oléfine aliphatique, de préférence à base de polyéthylène ou de polypropylène.

11. Dispositif selon l'une quelconque des revendications précédentes, dans lequel il s'agit d'un équipement de sport d'hiver en particulier d'un ski, d'une planche de glisse, d'une luge, d'un bob ou de parties de ces derniers, d'un équipement de sport de raquette, en particulier d'une raquette de tennis, de badminton, de squash, de tennis de table ou d'une batte de baseball, d'un vélo ou de pièces de ce dernier, d'un équipement de sport de loisir, en particulier d'un bâton de randonnée ou de ski, d'un équipement de jardinage, en particulier d'une pelle, d'une cisaille, d'une scie ou d'une scie à moteur, ou de parties de ces dernières, de pièces de véhicules automobiles ou d'une semelle intérieure.

12. Utilisation d'une matière thermoplastique à base d'un copolymère séquencé de styrène-isobutylène en tant que corps de base (1) dans un dispositif servant à amortir des chocs et des oscillations, en particulier des vibrations, selon l'une quelconque des revendications précédentes, dans laquelle la matière thermoplastique comprend 70 - 100 % en poids d'un copolymère séquencé de styrène-isobutylène et les séquences de polystyrène dans le copolymère séquencé comprennent 5 - 50 % en poids par rapport au poids total du copolymère séquencé.

13. Utilisation d'une matière thermoplastique selon la revendication 12 dans ou au niveau du cadre d'un véhicule.

14. Utilisation d'une matière thermoplastique selon la revendication 12 dans ou au niveau de l'accessoire ou de l'élément constitutif d'un vélo, en particulier d'un guidon, d'une potence, d'une manivelle, d'une pédale, d'une poignée, d'un porte-bagages, d'une selle et/ou d'un support de selle.
